# EUROPEAN PATENT APPLICATION

(11) **EP 4 685 543 A1**
(43) Date of publication of application: **28.01.2026**
(21) Application number: 24306244.5
(22) Date of filing: 23.07.2024
(51) Int. Cl.: G02B 27/00, G02B 27/01

(54) **EYEWEAR EQUIPMENT WITH ASSESSMENT OF AN ORIENTATION OF A WEARER'S EYE**

(71) Applicant: Essilor International, 94220 Charenton-Le-Pont (FR); Centre National de la Recherche Scientifique, 75016 Paris (FR)
(72) Inventor: COMBIER, Jessica, 31670 LABEGE (FR); BOUCHIER, Aude, 31000 TOULOUSE (FR); BIHAN, Armel, 71100 CHALON SUR SAONE (FR); PERCHOUX, Julien, 31500 TOULOUSE (FR)
(74) Representative: Plasseraud IP

(57) **Abstract**

An eyewear equipment (10) provides reliable assessment of an orientation of a wearer's eye. The eye orientation is inferred from spatial light gradient magnitudes which are provided by sensor assemblies (3) located so as to receive light reflected or backscattered from the wearer's eye. The eyewear equipment comprises a processing unit (14) which may be of neural network type, for assessing the eye orientation from the spatial light gradient magnitudes.

## Description

The invention relates to an eyewear equipment which allows assessing an orientation of an eye of a wearer of this equipment.

### - BACKGROUND OF THE INVENTION -

Systems that are capable of determining a gaze direction of an eyeglass wearer are of major interest for many purposes. More specifically, such systems commonly referred to as eye-tracking systems are intended to assess the orientation of each wearer's eye. Possible applications include varying an eyeglass power value or varying a design of a progressive eyeglass as functions of the eye orientation, or also varying a location of a tinted area in an electrochromic eyeglass as a function of the eye orientation with respect to an angularly-localized light source for avoiding dazzling. Still other applications relate to augmented-reality eyewear equipments or active filters.

Most of already-proposed eye-tracking systems are based on cameras that are integrated in the eyewear equipment for capturing images of the iris and pupil. But such cameras have numerous drawbacks, including their energy consumption, their size and weight, and also location requirements with respect to the eye for providing optimized measurements about eye orientation.

Some of these camera-based eye-tracking systems further require integrating light sources in the eyewear equipment, for improving reliability of the determination of the eye orientation. But such systems have still higher energy consumptions and require energy storage capacities which are not compatible with integration of batteries in the eyewear equipment.

However, camera-based eye-tracking systems are overkilling since the pattern of the imaged front part of the eyeball, comprising the pupil, iris and part of the sclera is constant or almost constant, and only the instant angular position of this pattern is relevant to eye orientation determination.

Starting from this situation, one object of the present invention consists in providing a new eye-tracking system that solves at least some of the above-mentioned issues or alleviate some of the drawbacks of the already-proposed systems.

An additional object of the invention consists in providing an eye-tracking system that allows reliable determination of the eye orientation, including in situations with parasitic images due to specular light reflected on the eyeball surface, or situations with bright and/or multiple light sources present in the vision field of the wearer.

Still another object of the invention consists in providing an eye-tracking system which does not cause discomfort to the wearer.

### - SUMMARY OF THE INVENTION -

For meeting at least one of these objects or others, an aspect of the present invention proposes an eyewear equipment that comprises a frame and at least one glass accommodated in a housing of the frame, and that further comprises:
- at least two sensor assemblies arranged in the eyewear equipment so as to receive light reflected or backscattered from a wearer's eye when the eyewear equipment is fitted on a wearer's face such that the wearer looks through the glass, each sensor assembly being configured to produce signals corresponding to the light received by this sensor assembly; and
- a processing unit configured to receive the signals from the at least two sensor assemblies and to output, based on these signals, an assessment of an orientation of the wearer's eye as existing when this wearer's eye has reflected or backscattered light to the at least two sensor assemblies.

According to a feature of the invention, each of the at least two sensor assemblies is configured to sense at least one spatial light gradient of the light received by this sensor assembly, as the spatial light gradient was existing at the sensor assembly when receiving the light, and the signals produced by the sensor assembly contain a characterization of a magnitude of the spatial light gradient.

Thanks to each sensor assembly being sensitive to spatial light gradient, the processing unit is provided with input information which exhibits increased variations depending on the actual eye orientation. For this reason, the reliability of the invention eyewear equipment for determining eye orientation is improved.

In addition, because the sensor assemblies do not need to be of matrix image sensor type, they can be low energy-consuming, small-sized and lightweight. Thus, integration of the sensor assemblies and also optionally of suitable batteries in the eyewear equipment, in particular in its frame, is easier.

In possible embodiments of the invention eyewear equipment, each sensor assembly may comprise at least two photodetectors separated from each other in a separation direction. In such case, the sensor assembly may be configured so that the signals produced by this sensor assembly contain a characterization of at least one difference between measurement results of light amounts received separately and respectively by the at least two photodetectors at a same time, thus forming the characterization of the magnitude of the spatial light gradient. Transmission of information that is directed to the measurement result difference instead of directed to the light amounts received separately and respectively by the at least two photodetectors is more efficient insofar as it is more immune to ambient light. It carries, throughout simple mathematical operations, a more direct indication of the eye orientation, thus reducing the amount of data to be handled, processed and transmitted.

In preferred embodiments of the invention, the photodetectors of each sensor assembly may have one of the following layouts:
- the photodetectors are aligned parallel to the separation direction,
- the photodetectors are distributed on a circle, an ellipse, a polygon, in particular a square or a rectangle, and
- the photodetectors are juxtaposed next to one another so as to form a matrix array, in particular a 2 x 2 array as commonly referred to as four-quadrant photodiode assembly.

Generally when the signals produced by each sensor assembly contain a characterization of at least one difference between measurement results of light amounts received separately and respectively by its photodetectors, this difference may be assessed either in an analog format or in a digital format within the sensor assembly. But analog format may be preferred, and possibly also preferred for further division of the assessed difference by a sum of the measurement results. However, it is possible to convert the difference result or the division result thereafter in digital format, in particular within the sensor assembly before the difference or division result is transmitted to the processing unit.

Generally for the invention, at least one of the sensor assemblies may further comprise a field-of-view limiter, this field-of-view limiter being designed so that an angular aperture effective for the light received by the sensor assembly is less than 25° (degree), preferably comprised between 5° and 15°. Such angular ranges have proven to provide best sensitivity and reliability of the invention eyewear equipment to variations of the eye orientation. In particular, the field-of-view limiter may be of one of the following types: a diaphragm, a light-conducting hole, a lens, a light-shaping film, a diffractive optics, a beam-shaping component and an optical fiber. Alternatively, the field-of-view limiter may be of an active type, suitable for varying the angular aperture based on a control signal which is inputted into this field-of-view limiter.

Again generally for the invention, at least one of the sensor assemblies of the invention eyewear equipment may further comprise a light-deflecting element, in particular a prism or a diffracting component such as a one-dimensional or a two-dimensional grating and a holographic component. Such light-deflecting element may facilitate integration of the sensor assembly in the eyewear equipment, in particular in its frame while allowing thin and aesthetic frame design.

Again generally for the invention, at least one of the sensor assemblies may further comprise a polarizing element, preferably a linear-polarizing element. Such polarizing element reduces disturbance of the measurements performed by each sensor assembly that may be due to specular reflections occurring on the eyeball surface with light originating from external sources present in the wearer's environment.

Again generally for the invention, each sensor assembly may be of any type, selected in particular depending on a desired spectral sensibility range. But advantageously, at least one of the sensor assemblies may be suitable for being sensitive to visible light, preferably being silicon-based, in particular comprising silicon-based photodiodes or ambient light sensors.

Again generally for the invention, at least one of the sensor assemblies may be embedded in the frame at one of the following locations with respect to a fitting position of the eyewear equipment on the wearer's face and wearer's head being oriented vertically, for each wearer's eye:
- an upper location situated above a portion of the glass that is in line with an eyeball center of the wearer's eye, and the sensor assembly is oriented so that a direction of the corresponding sensed spatial light gradient forms an angle of less than 20° with a vertical direction;
- a lower location situated below a portion of the glass that is in line with the eyeball center of the wearer's eye, and the sensor assembly is oriented so that the direction of the corresponding sensed spatial light gradient forms an angle of less than 20° with the vertical direction;
- a right-side location shifted to right wearer's side with respect to the portion of the glass that is in line with the eyeball center of the wearer's eye, and the sensor assembly is oriented so that the direction of the corresponding sensed spatial light gradient forms an angle of less than 20° with a horizontal direction;
- a left-side location shifted to left wearer's side with respect to the portion of the glass that is in line with the eyeball center of the wearer's eye, and the sensor assembly is oriented so that the direction of the corresponding sensed spatial light gradient forms an angle of less than 20° with the horizontal direction;
- an upper-right location shifted into up-right wearer's direction with respect to the portion of the glass that is in line with the eyeball center of the wearer's eye, and the sensor assembly is oriented so that the direction of the corresponding sensed spatial light gradient forms an angle of between 20° and 40° with the vertical direction;
- an upper-left location shifted into up-left wearer's direction with respect to the portion of the glass that is in line with the eyeball center of the wearer's eye, and the sensor assembly is oriented so that the direction of the corresponding sensed spatial light gradient forms an angle of between 20° and 40° with the vertical direction;
- a lower-right location shifted into low-right wearer's direction with respect to the portion of the glass that is in line with the eyeball center of the wearer's eye, and the sensor assembly is oriented so that the direction of the corresponding sensed spatial light gradient forms an angle of between 20° and 40° with the vertical direction; and
- a lower-left location shifted into low-left wearer's direction with respect to the portion of the glass that is in line with the eyeball center of the wearer's eye, and the sensor assembly is oriented so that the direction of the corresponding sensed spatial light gradient forms an angle of between 20° and 40° with the vertical direction.

These locations and corresponding gradient directions are optimized with respect to the eyelid edges and to general features of elements existing in the wearer's environment and face.

Again generally for the invention, the invention eyewear equipment may comprise from three to eight sensor assemblies for each wearer's eye. This range is indeed a trade-off between limited total energy consumption and sufficient measurement results for determining eye orientation in a reliable manner.

Again generally for the invention, the processing unit may further be configured for time-filtering successively characterized spatial light gradient magnitudes, or for time-filtering successive assessments of the orientation of the wearer's eye, or for determining a next assessment of the orientation of the wearer's eye from at least one prior assessment combined with newly characterized spatial light gradient magnitudes. Such time-filtering methods are efficient for suppressing parasitic effects which may otherwise disturb the eye orientation assessment.

Again generally for the invention, the processing unit may further be configured for assessing the orientation of the wearer's eye by implementing any algorithm. However, algorithms of neural-network type may be preferred, although regression-type algorithms or classification-type algorithms are also possible.

Finally and still generally for the invention, the eyewear equipment may comprise two eyeglasses accommodated in respective housings of the frame, and the sensor assemblies may be distributed into two separate sets dedicated separately to each of both eyeglasses. Then, the processing unit may be configured for issuing assessments of respective orientations of both wearer's eyes, separately for each eye, from the spatial light gradient magnitudes characterized by the sensor assemblies dedicated to the eyeglass of this eye. Possibly, the assessment results thus obtained for both eyes may be used for determining a gaze distance currently effective for the wearer of the eyewear equipment.

Alternatively, the eyewear equipment may be a mask with a single glass common to both wearer's eyes, such as a skiing mask, a diving mask, a protection mask for safety purpose, etc.

These and other features of the invention will be now described with reference to the appended figures, which relate to preferred but not-limiting embodiments of the invention.

### - BRIEF DESCRIPTION OF THE DRAWINGS -

Figure 1a is a general view of an eyewear equipment according to the present invention.
Figure 1b is an enlargement of part of Figure 1a.
Figures 2a-2f illustrate six photodetector layouts possible for each sensor assembly of the eyewear equipment of Figure 1a.
Figure 3a illustrates an optical component which may be optionally combined with a sensor assembly of the eyewear equipment of Figure 1a.
Figures 3b-3c illustrate efficiency of a possible beam-shaping component when combined with a sensor assembly as illustrated in Figure 2b.
Figures 4a-4c illustrate three filtering configurations which may be implemented in the eyewear equipment of Figure 1a.

For clarity sake, element sizes which appear in these figures do not correspond to actual dimensions or dimension ratios. Also, same reference numbers which are indicated in different ones of these figures denote identical elements of elements with identical function.

### - DETAILED DESCRIPTION OF THE INVENTION --

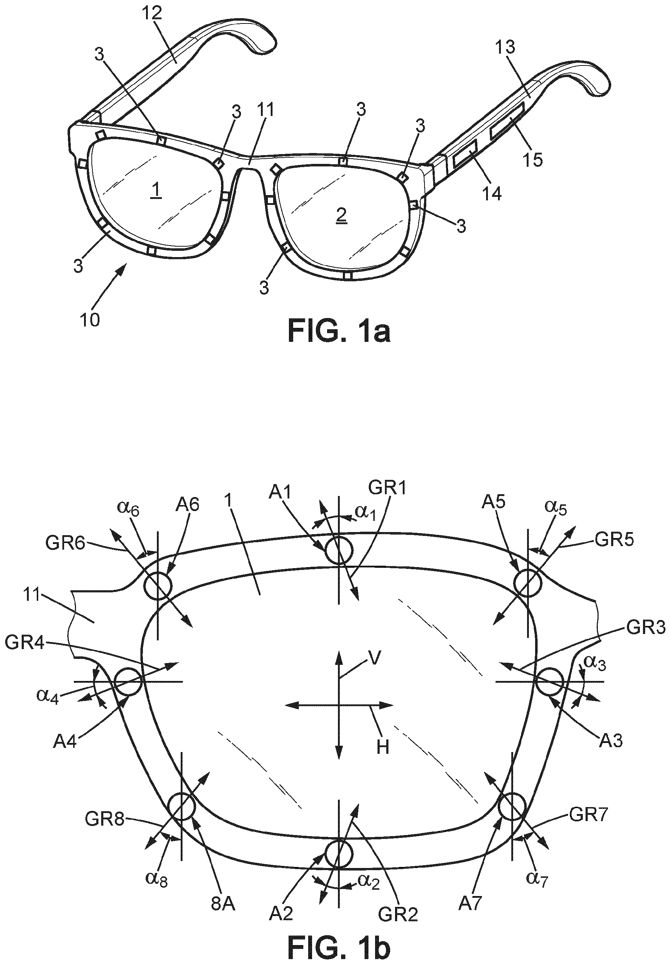

Referring to Figure 1a, an eyewear equipment 10 is of the type pair of eyeglasses maintained in a frame 11. Reference numbers 1 and 2 denote both glasses that are maintained in respective housings of the frame 11. Each glass may advantageously be surrounded by corresponding parts of the frame 11, and this latter may further comprise temples 12 and 13 suitable for maintaining the eyewear equipment 10 on the face of a wearer, in a usual way. Although the present detailed description considers a two-eyeglass eyewear equipment, it is obvious to adapt it to another type of eyewear equipment, for example a goggle with a single continuous glass common to both wearer's eyes. In each frame part that surrounds one of the glasses 1 and 2 of the eyewear equipment 10 of Figure 1a, small squares labelled with reference number 3 represent sensor assemblies that are involved with the present invention. These sensor assemblies 3 are arranged in the surface of the frame 11 that is oriented toward the wearer's face, referred to as inner frame face. As further explained later below, each sensor assembly 3 has a corresponding gradient-sensing direction which is oriented depending on the location of the sensor assembly with respect to the corresponding glass 1, 2. Figure 1b illustrates part of the inner frame face with preferred locations for those of the sensor assemblies 3 that are dedicated to eyeglass 1, referring to left and right sides of the wearer, and vertical and horizontal directions V and H respectively:
- upper location as pointed by arrow A1, with gradient-sensing direction GR1 forming an angle on of less than 20° with direction V,
- lower location as pointed by arrow A2, with gradient-sensing direction GR2 forming an angle α₂ of less than 20° with direction V,
- right-side location as pointed by arrow A3, with gradient-sensing direction GR3 forming an angle as of less than 20° with direction H,
- left-side location as pointed by arrow A4, with gradient-sensing direction GR4 forming an angle α₄ of less than 20° with direction H,
- upper-right location as pointed by arrow A5, with gradient-sensing direction GR5 forming an angle α₅ of between 20° and 40° with direction V,
- upper-left location as pointed by arrow A6, with gradient-sensing direction GR6 forming an angle as of between 20° and 40° with direction V,
- lower-right location as pointed by arrow A7, with gradient-sensing direction GR7 forming an angle α₇ of between 20° and 40° with direction V, and
- lower-left location as pointed by arrow A8, with gradient-sensing direction GR8 forming an angle as of between 20° and 40° with direction V.

Although eight sensor assemblies 3 appear in Figure 1a for each eyeglass 1, 2, it is not necessary for the invention that all of them are used, and locations other than those shown in Figure 1b are also possible.

Reference numbers 14 and 15 in Figure 1a respectively denote a processing unit and a battery which may be advantageously integrated in one or both temples 12, 13. The battery 15 is electrically connected to the processing unit 14 and possibly also to each sensor assembly 3 for enabling suitable operation thereof. Additionally, each sensor assembly 3 is connected to the processing unit 14 for transmitting signals that are produced by this sensor assembly. The processing unit 14 then assesses from these signals, orientation of the wearer's eye that is concerned with the sensor assemblies 3 sending the signals. The assessment of the eye orientation may be outputted by the processing unit 14 using various coordinate systems, such as azimuth and elevation angles of the optical axis of the wearer's eye relative to the frame 11, or xy-coordinates of the intersecting point of the optical axis of the wearer's eye with the corresponding eyeglass, or cartesian coordinates of a unit vector of the optical axis of the wearer's eye, etc.

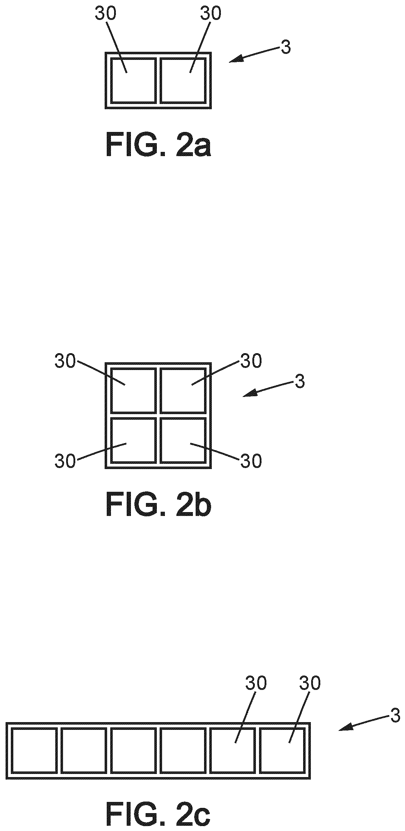

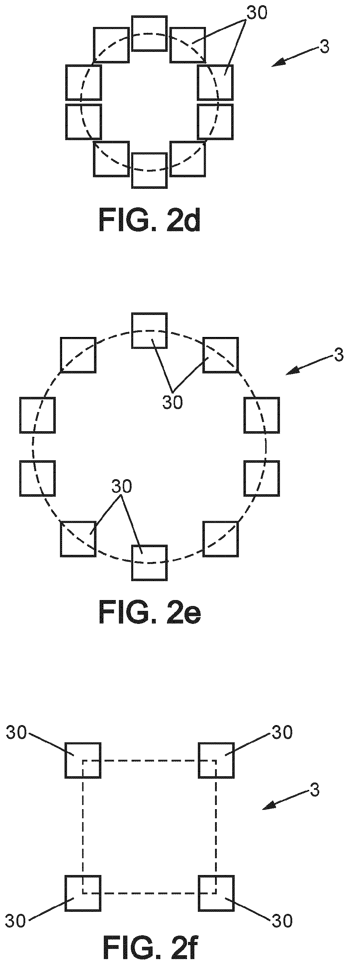

Each sensor assembly 3 may comprise several photodetectors 30 that are separated from each other and in-plane distributed according to a defined layout. Each photodetector is preferably square but could be rectangular, circular or of any other shape. Preferably, each photodetector 30 may be a photodiode, in particular a silicon-based photodiode suitable for light detection in the visible range. Alternatively, each photodetector 30 may be an ambient light sensor, commonly referred to as ALS and composed of silicon-based photodiodes equipped with photopic filters to simulate human vision. Figures 2a-2f show the following possible layouts: a pair of juxtaposed photodetectors 30 (Figure 2a), four photodetectors 30 juxtaposed as a 2x2 matrix array known as four-quadrant photodetector assembly (Figure 2b), a segment of six juxtaposed photodetectors 30 (Figure 2c), ten juxtaposed photodetectors 30 arranged on a circle (Figure 2d), photodetectors 30 arranged on a circle but spaced apart from each other (Figure 2e), and four photodetectors 30 arranged at apexes of a square and spaced apart from each other (Figure 2f). In a known manner, spatial light gradient can be measured using such sensor assemblies 3 by assessing differences between the light amounts respectively sensed by the photodetectors 30 of one and same sensor assembly 3 based on the photodetector positions in projection onto the desired gradient-sensing direction. Preferably, such difference may be assessed in analog format through suitable hardware design integrated within each sensor assembly 3. Such operation for gradient sensing of light distribution is well-known for a four-quadrant photodiode assembly. Possibly, each photodetector assembly 3 may further calculate a division of the difference result by a result of a sum of the sensed light amounts which have been used in the difference, so as to obtain a final result normalized to unity. Such division if any may also advantageously be implemented in analog format. The result of the difference or that of the difference-then-division forms the characterization of the spatial light gradient which is produced by each sensor assembly 3 and transmitted to the processing unit 14 using appropriate transmission signals. These signals may be wire-transmitted through electrical tracks (not shown) integrated within the frame 11. Preferably, the result of the difference or difference-then-division may be converted to digital format prior to transmission within each sensor assembly 3. Also preferably, the processing unit 14 receives such signals from at least three sensor assemblies 3 relating to one and same eye for each assessment of the orientation of this eye, so that this assessment has enough reliability.

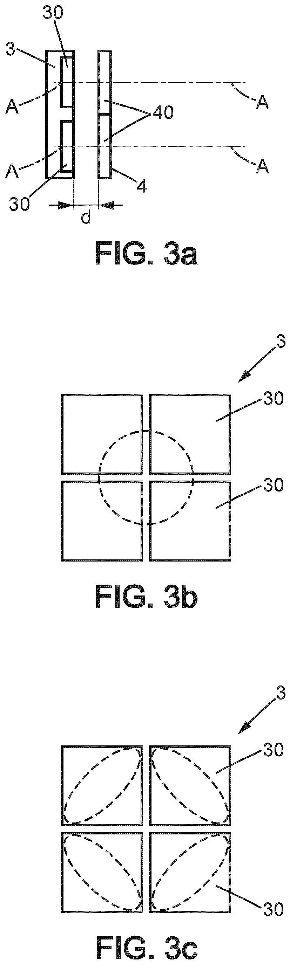

Advantageously, each sensor assembly 3 may be combined with at least one optical component designed for increasing variations of the sensed magnitude of spatial light gradient as a function of the eye orientation. Such optical component is labelled with reference number 4 in Figure 3a. In particular, the optical component 4 may be comprised of component parts 40 which are respectively dedicated to the individual photodetectors 30 of the sensor assembly 3. Thus, each component part 40 intersects the optical axis A-A of a corresponding one of the photodetectors 30, at a distance d from a front surface thereof. This distance d may be less than 0.5 mm (millimetre) or longer, depending on the component design. A first possible function of such optical component 4 may be limiting the field-of-view of each photodetector 30 towards the eye, effective for light received by this photodetector. Preferably, the field-of-view of each photodetector 30 may be thus limited to an angular aperture of less than 25°, preferably of between 5° and 15°. Such field-of-view limiter may be of one of the following types: a diaphragm located at some distance in front of the photodetector, a light-conducting hollow shape extending from the photodetector, a lens, a light-shaping film, a diffractive optics, a beam-shaping component, an optical fiber, etc. When a lens is implemented in front of one of the photodetectors 30, it does not necessarily conjugate the photodetector with part of the eyeball surface. Possibly, an active field-of-view limiter may be used, for example of spatial light-filter type, that produces a varying angular aperture based on a control signal. As an illustration, Figures 3b and 3c show a four-quadrant photodetector assembly 3 without and with a beam-shaping component. Without beam-shaping component, the light beam that impinges onto the sensor assembly 3 has axial symmetry, as shown by the circle in interrupted line in Figure 3b. But the beam-shaping component makes this light beam comprised of four sub-beams each of elongated cross-sectional area and sensed by a respective one of the photodetectors 30 as shown in Figure 3c. The elongated cross-sectional area of each sub-beam is represented as an ellipse again in interrupted line. Such sub-beam configuration reduces correlations between the light amounts that are sensed separately by the photodetectors 30, and increases sensitivity to spatial light gradient. A second possible function the optical component 4 may be deflecting light that is sensed by each photodetector 30. In this way, the detected light beam may be angularly offset with respect to the optical axis A-A of the photodetector 30, making it easier to integrate the sensor assembly 3 into the frame 11 while pointing the line-of-sight of each photodetector 30 toward the appropriate area of the eyeball surface. Preferably, the line-of-sight of each photodetector 30 may be directed in this way to an area at the eyeball surface which contains part of the limit between iris and sclera. In a known manner, such light-deflecting element may be a prism or a diffracting component such as a one-dimensional or a two-dimensional grating and a holographic component. Such respective light-deflecting element may be individually dedicated to each photodetector 30 of a same one of the sensor assemblies 3, or common to the photodetectors 30 of this sensor assembly 3. A third possible function the optical component 4 may be light-polarization, for example for filtering linearly polarized light. Such light-polarization filtering can suppress part of corneal reflections of specular type which may occur, in particular for outdoor conditions. Possibly, one and same optical component 4 may have several of the above-recited functions.

The processing unit 14 may be optimized for being low energy consuming. For example, the processing unit 14 may have reduced number of logic gates and low clock frequency. In preferred implementations, the processing unit 14 may be a special ASIC, or application-specific integrated circuit, or alternatively a FPGA integrated circuit, standing for field-programmable gate array. Preferably, it may implement a neural network for assessing the orientation of the eye from the signals originating from some or all of the sensor assemblies 3 which are dedicated to this eye. Small neural networks are preferred, including binarized neural networks or BNN, convolutional neural networks or CNN, and recurrent neural networks or RNN. Thanks to these signals characterizing the magnitudes of spatial light gradients, the eye orientation assessment is improved in accuracy and reliability. In particular, when implementing regression, multilayer perceptron structures may be used advantageously. However, regression-type algorithm or a classification-type algorithm may be used alternatively to neural networks within the processing unit 14.

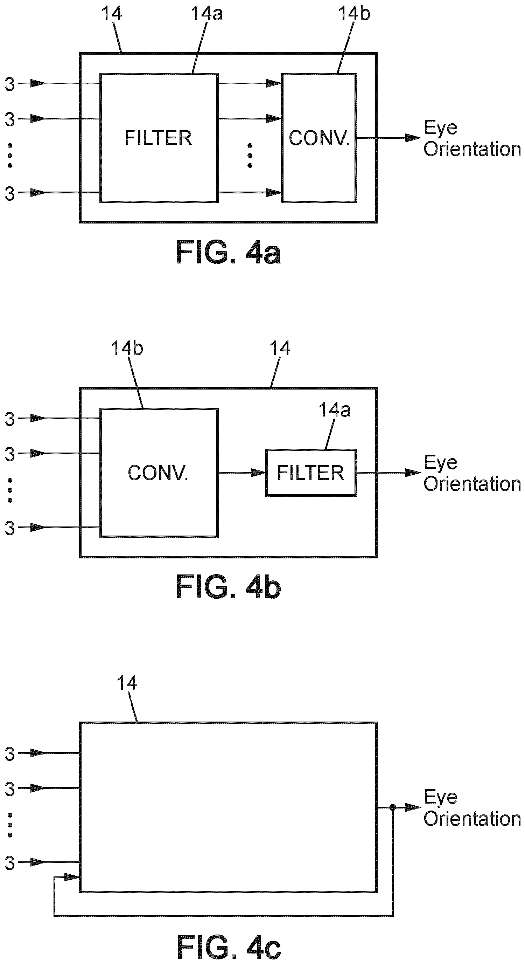

According to an improvement of the invention, time-consistency may be used for delivering eye orientation assessments which are improved in reliability. To this end, time-filtering may be applied either to successive characterizations of spatial light gradient magnitudes which are delivered by each sensor assembly 3, or to successive eye orientation assessments. A Kalman filter may be used in each case. Figure 4a illustrates the first case where time-filtering is applied to spatial light gradient magnitudes produced by the sensor assemblies 3, before inferring of the eye orientation. In such case, the processing unit 14 may comprise a time-filtering module 14a, noted FILTER, which applies time-filtering separately to respective streams of successive spatial light gradient magnitudes originating from the sensor assemblies 3. Then, a conversion module 14b, noted CONV., within the processing unit 14 converts the time-filtered spatial light gradient magnitudes into successive assessments of eye orientations. According to Figure 4b, the conversion module 14b operates first with the successive sets of spatial light gradient magnitudes delivered by the sensor assemblies 3. It outputs successive assessments of the eye orientation which are then processed by the time-filtering module 14a. In both cases, the conversion module 14b may implement one of the algorithms mentioned above. Figure 4c illustrates still another possible configuration where time-filtering is implemented directly in the conversion process from the spatial light gradient magnitudes to the eye orientation assessments. In such case, the processing unit 14 has a further input where the previous eye orientation assessment result(s) is (are) reinjected, and combines this (these) previous eye orientation assessment result(s) with the newly received set of spatial light gradient magnitudes. Such integrated time-filtering may be implemented in particular with a binarized neural network, a convolutional neural network or a recurrent neural network.

According to another improvement of the invention, the conversion of the characterizations of spatial light gradient magnitudes into eye orientation assessments may itself be implemented as a two-step process, each possibly involving a separate neural network. The first step may consist in determining context data such as light sources existing in the wearer's environment, outdoor or indoor environment conditions, current position of the eyewear equipment on the wearer's face, including possible slipping along his nose, existing eye artefact such as makeup and injuries, eyelid shape and movement, pupil diameter, wearer's head orientation, etc. This first step may be executed based on detection results provided by dedicated sensors other than the sensor assemblies 3, such as cameras or an inertial measurement unit also integrated within the frame 11. Then, the eye orientation is determined from the spatial light gradient magnitudes using the results of the context data. With such two-step process, the first step may not be repeated for each iteration of the eye orientation assessment, but at a lower frequency or when the eye orientation assessment results no longer meet a consistency or validation criterium. This another improvement of the invention can be combined with the previous one dealing with time-filtering.

According to still another improvement of the invention, it is possible to add at least one embedded light source in the inner frame face for emitting light toward the wearer's eye in situations where ambient lightening is insufficient to allow determination of the eye orientation without supplemental light. Such embedded light source may be useful in situations such as night walking or driving, for example.

## Claims

1. An eyewear equipment (10) comprising a frame (11) and at least one glass (1, 2) accommodated in a housing of the frame, the eyewear equipment further comprising:
- at least two sensor assemblies (3) arranged in the eyewear equipment (10) so as to receive light reflected or backscattered from a wearer's eye when the eyewear equipment is fitted on a wearer's face such that the wearer looks through the glass, each sensor assembly being configured to produce signals corresponding to the light received by said sensor assembly; and
- a processing unit (14) configured to receive the signals from the at least two sensor assemblies (3) and to output, based on said signals, an assessment of an orientation of the wearer's eye as existing when said wearer's eye has reflected or backscattered light to the at least two sensor assemblies,
**characterized in that** each of the at least two sensor assemblies (3) is configured to sense at least one spatial light gradient of the light received by said sensor assembly, as said spatial light gradient was existing at said sensor assembly when receiving the light, and the signals produced by said sensor assembly contain a characterization of a magnitude of the spatial light gradient.

2. The eyewear equipment (10) of claim 1, wherein each sensor assembly (3) comprises at least two photodetectors (30) separated from each other in a separation direction, and the sensor assembly is configured so that the signals produced by said sensor assembly contain a characterization of at least one difference between measurement results of light amounts received separately and respectively by said at least two photodetectors at a same time, thus forming the characterization of the magnitude of the spatial light gradient.

3. The eyewear equipment (10) of claim 2 wherein for each sensor assembly (3), the photodetectors (30) of said sensor assembly have one of the following layouts:
- the photodetectors (30) are aligned parallel to the separation direction,
- the photodetectors (30) are distributed on a circle, an ellipse, a polygon, in particular a square or a rectangle, and
- the photodetectors (30) are juxtaposed next to one another so as to form a matrix array, in particular a 2 x 2 array.

4. The eyewear equipment (10) of claim 2 or 3, wherein each sensor assembly (3) is configured for assessing the difference between the measurement results of the light amounts received separately and respectively by at least two photodetectors (30) of said sensor assembly in an analog format, and preferably for further dividing the assessed difference by a sum of said measurement results also in an analog format.

5. The eyewear equipment (10) of one of the preceding claims, wherein at least one of the sensor assemblies (3) further comprises a field-of-view limiter, said field-of-view limiter being designed so that an angular aperture effective for the light received by said sensor assembly is less than 25°, preferably comprised between 5° and 15°.

6. The eyewear equipment (10) of claim 5, wherein the field-of-view limiter is of one of the following types: a diaphragm, a light-conducting hole, a lens, a light-shaping film, a diffractive optics, a beam-shaping component and an optical fiber.

7. The eyewear equipment (10) of claim 5, wherein the field-of-view limiter is of an active type, suitable for varying the angular aperture based on a control signal inputted into said field-of-view limiter.

8. The eyewear equipment (10) of one of the preceding claims, wherein at least one of the sensor assemblies (3) further comprises a light-deflecting element, in particular a prism or a diffracting component such as a one-dimensional or a two-dimensional grating and a holographic component.

9. The eyewear equipment (10) of one of the preceding claims, wherein at least one of the sensor assemblies (3) further comprises a polarizing element, preferably a linear-polarizing element.

10. The eyewear equipment (10) of one of the preceding claims, wherein at least one of the sensor assemblies (3) is suitable for being sensitive to visible light, preferably being silicon-based, in particular comprising silicon-based photodiodes or ambient light sensors.

11. The eyewear equipment (10) of one of the preceding claims, wherein at least one of the sensor assemblies (3) is embedded in the frame (11) at one of the following locations with respect to a fitting position of the eyewear equipment on the wearer's face and wearer's head being oriented vertically, for each wearer's eye:
- an upper location (A1) situated above a portion of the glass (1, 2) that is in line with an eyeball center of the wearer's eye, and the sensor assembly (3) is oriented so that a direction of the corresponding sensed spatial light gradient forms an angle of less than 20° with a vertical direction;
- a lower location (A2) situated below a portion of the glass (1, 2) that is in line with the eyeball center of the wearer's eye, and the sensor assembly (3) is oriented so that the direction of the corresponding sensed spatial light gradient forms an angle of less than 20° with the vertical direction;
- a right-side location (A3) shifted to right wearer's side with respect to the portion of the glass (1, 2) that is in line with the eyeball center of the wearer's eye, and the sensor assembly (3) is oriented so that the direction of the corresponding sensed spatial light gradient forms an angle of less than 20° with a horizontal direction;
- a left-side location shifted (A4) to left wearer's side with respect to the portion of the glass (1, 2) that is in line with the eyeball center of the wearer's eye, and the sensor assembly (3) is oriented so that the direction of the corresponding sensed spatial light gradient forms an angle of less than 20° with the horizontal direction;
- an upper-right location (A5) shifted into up-right wearer's direction with respect to the portion of the glass (1, 2) that is in line with the eyeball center of the wearer's eye, and the sensor assembly (3) is oriented so that the direction of the corresponding sensed spatial light gradient forms an angle of between 20° and 40° with the vertical direction;
- an upper-left location (A6) shifted into up-left wearer's direction with respect to the portion of the glass (1, 2) that is in line with the eyeball center of the wearer's eye, and the sensor assembly (3) is oriented so that the direction of the corresponding sensed spatial light gradient forms an angle of between 20° and 40° with the vertical direction;
- a lower-right location (A7) shifted into low-right wearer's direction with respect to the portion of the glass (1, 2) that is in line with the eyeball center of the wearer's eye, and the sensor assembly (3) is oriented so that the direction of the corresponding sensed spatial light gradient forms an angle of between 20° and 40° with the vertical direction; and
- a lower-left location (A8) shifted into low-left wearer's direction with respect to the portion of the glass (1, 2) that is in line with the eyeball center of the wearer's eye, and the sensor assembly (3) is oriented so that the direction of the corresponding sensed spatial light gradient forms an angle of between 20° and 40° with the vertical direction.

12. The eyewear equipment (10) of one of the preceding claims, comprising from three to eight sensor assemblies (3) for each wearer's eye.

13. The eyewear equipment (10) of one of the preceding claims, wherein the processing unit (14) is further configured for time-filtering successively characterized spatial light gradient magnitudes, or for time-filtering successive assessments of the orientation of the wearer's eye, or for determining a next assessment of the orientation of the wearer's eye from at least one prior eye orientation assessment combined with newly characterized spatial light gradient magnitudes.

14. The eyewear equipment (10) of one of the preceding claims, wherein the processing unit (14) is further configured for assessing the orientation of the wearer's eye by implementing an algorithm of neural-network type, a regression-type algorithm or a classification-type algorithm.

15. The eyewear equipment (10) of one of the proceeding claims, comprising two eyeglasses (1, 2) accommodated in respective housings of the frame (11), and wherein the sensor assemblies (3) are distributed into two separate sets dedicated separately to each of both eyeglasses, and the processing unit (14) is configured for issuing assessments of respective orientations of both wearer's eyes, separately for each eye, from the spatial light gradient magnitudes **characterized by** the sensor assemblies dedicated to the eyeglass of said eye.
